# EUROPEAN PATENT APPLICATION

(11) **EP 1 184 659 A1**
(43) Date of publication of application: **06.03.2002**
(21) Application number: 00830597.1
(22) Date of filing: 01.09.2000
(51) Int. Cl.: G01N 15/14

(54) **Method and apparatus for the automatic detection and recognition of pollens**

(71) Applicant: ZAMBON GROUP S.p.A., 36100 Vicenza (IT); INRIA INSTITUT NATIONAL DE RECHERCHE EN INFORMATIQUE ET EN AUTOMATIQUE, Rocquencourt F-78153 Le Chesnay (FR)
(72) Inventor: Belmonte, Jordina, Cerdanyola del Vallès (ES); Bonton, Pierre, 63000 Clermont-Ferrand (FR); Boucher, Alain, INRIA BP 93, 06902 Sophia-Antipolis (FR); Galan, Carmen, 14004 Cordoba (ES); Hidalgo, Pablo, 14004 Cordoba (ES); Thonnat, Monique, INRIA, 06902 Sophie-Antipolis (FR); Tomczak, Régis, 63000 Clermont-Ferrand (FR)
(74) Representative: Panossian, Stefano

(57) **Abstract**

A method and apparatus for the automatic detection, recognition and counting of pollens in the atmosphere with improved characteristics based on a three-dimensional analysis of the pollen grains and on description and knowledge of known pollen types are described.

## Description

The present invention concerns a method and apparatus for the automatic detection, recognition and counting of pollen grains in the atmosphere and more particularly it concerns a method and apparatus with improved characteristics based on a three-dimensional analysis.

Pollen grains may cause severe allergies to sensible people and, once the allergic symptoms appear, they are debilitating (asthma, allergic rhinitis, etc.) and difficult to be treated.

On the other hand, it is unjustified to prevent the allergic disease by taking drugs on a chronic base.

It is highly preferred to make a timely treatment if and when there is a concrete risk of allergies and to take due precautions to limit the exposure.

Such a risk knowledge is obtained thanks to an early information about the presence or the foreseen presence of pollen grains in the area where the patient is.

All the year round, but especially in spring, many kinds of pollen are released by plants in the air.

Only some kinds of pollen cause allergies. So, in order to evidence and forecast the presence of allergenic pollen grains in the air it is not only necessary to detect the presence of pollen but also to identify those released by certain plants.

In fact, for example, the allergenic pollens in the Mediterranean area belong mainly to the following plant families or genus: Cupressaceae, *Olea, Parietaria* and Poaceae. However, other not so allergenic pollens can be confused with them, such as those released by *Populus,* Brassicaceae, *Fraxinus, Ligustrum, Morus, Celtis*, etc.

Presently the capability of recognizing different pollen grains is left to the experience of Palynologists, i.e. of Experts who are able to identify pollens thanks to their general knowledge of palynology and by studying through a light microscope their shape and appearance.

The activity of Palynologists is time and labour consuming and the number of such Experts is not sufficient for a capillary monitoring of pollens in relatively large areas.

It is thus desirable to have available an apparatus for the automatic detection of pollen grains which can also carry-out the recognition of pollen types by methods close to the Palynologists experience.

In order to achieve this result a method and apparatus has been described in Japanese patent application No. JP 10019755 (filed on April 30, 1996).

Such apparatus consists of a known pollen collection device, a system for colouring the collected pollen, a microscope and a camera connected to a computerised image analyser which distinguish between pollen grains and dust and which can count the collected pollen grains.

However, the accuracy in the recognition of pollens is a vital matter which does not appear to be solved by the above cited Japanese application.

In the "Proceeding of RFIA '98", vol. 2, pages 347-356, Clermont Ferrand (France), January 1998, a method for pollen recognition has been described.

This method, which in principle can be used together with the apparatus described in the above cited patent application, consists in an algorithm for image automated focusing applied to microscopy.

This algorithm allows to find the best overall focusing position for an examined sample on a large movement range.

The application of such algorithm to pollen recognition is described too. It consists in finding automatically the best focusing position and to have a clear, yet bi-dimensional, image of the pollen grain so as to improve the capability of the image analyser to recognise the type of pollen.

However, Palynologists recognition of pollen is based not only on the observation of bi-dimensional characteristics like 2D size and 2D shape, but also on other characteristics which only can be distinguished in three-dimensional like the layers details (exine and intine), apertures (pori and colpi) or some remarkable aspects of the cytoplasm.

We have now found, and is the object of our invention, a method and apparatus providing an automatic pollen recognition system with improved characteristics.

The method object of the invention consists in analysing, through an image analyser system, a variety of planes of each pollen grain so as to evidence not only the 2D size and the 2D shape, but also other meaningful characteristics of the grains in order to correctly attribute the pollen type.

This method is conveniently carried out by an apparatus consisting of a microscope with a three-dimensionally moving plate for housing the specimen, a camera, a computer with a suitable program which automatically focuses the best image of the selected grain and then, by shifting the moving plate, takes a series of images of planes of the grain parallel to the best-focus plane in both above and below directions with respect to said plane.

The result is a three-dimensional image of the grain, as seen through the microscope, which evidences, beside size and shape, other meaningful characteristics like pori, colpi, folds, rugosities and cytoplasm.

By automatically comparing these three-dimensional images with memorized description and knowledge of the characteristics of known pollen types stored in its memory, the image analyser is able to distinguish the pollen types with a high degree of precision.

Obviously, the method and apparatus of the invention are suitable not only for recognising the pollen types but also for counting the grains of each pollen type, according to methods per se known.

With respect to the known system and apparatus described in the above cited literature, the object of the invention differs in taking not only the best focused image of the pollen grain but also the images of parallel planes (up to 50 above and 50 below the best focused plane), thus obtaining not only the bi-dimensional size and shape of the grain at the best focused plane but also the image of a series of other planes (at different focus) which create a three-dimensional image of the grain.

Thus, the image analyser by working on a three-dimensional image and by comparing many details of the pollen grain with the description and knowledge about known pollen types stored in its memory, gives a very precise recognition of the pollen type.

By a practical point of view, the apparatus object of the invention needs the preliminary steps (per se well known) of collecting the pollen grains from the air and of colouring them to prepare the specimen to be put on the moving microscope plate for its analysis.

The step of collecting the grain can be conveniently carried out with an existing apparatus which intakes air and makes the solid particles therein contained (pollen grains and dust) adhere on a glued band. The band is positioned on a rotating drum which rotates at an established speed so as to allow the separation of the glued band in portions corresponding e.g. to a whole day.

The portion of the band carrying the collected solid particles in the pre-selected time period is then subjected to colouring with a suitable dye which is absorbed by the pollen grains only. The thus prepared specimen is then positioned on the moving plate of the microscope.

Due to the fact that the sample reading practice is different from Country to Country (e.g. by vertical or horizontal lines) the apparatus of the invention is suitable of the counting by the most used methods and also provides the possibility to count the pollens in the whole sample.

The computer moves the plate so as to scan the surface of the specimen and each time a pollen grain is evidenced its position on the specimen is recorded by an orthogonal scale. Thereafter, the three-dimensional imaging of each pollen grain is carried out by the method and apparatus object of the present invention.

As reported in Japanese patent application No. JP 10019755, the collection of pollen, their colouring and the placement of the specimen under the microscope can be carried out automatically.

In case the apparatus object of the invention is coupled to an automatic apparatus for the collection of pollens and the preparation of the specimen, then the result will be a fully automatic system.

Alternatively, the preparation of the specimen could be demanded to the work of a technician.

By applying what above described it is clear how a relevant number of fully automatic or semi-automatic stations for collecting pollen grains from the atmosphere and processing them up to a detailed recognition and counting, can be installed.

The results of such analyses can be transmitted (for example directly by the computer which performed the pollen recognition) to a pollen database or a pollen counting report may be prepared.

These outputs of the system may also be transmitted to a center wherein an expert Palynologist will study them and draw conclusions about the presence of pollen in a certain area and forecast the future presence in another area.

The risk knowledge thus created can be distributed to pharmacies and doctors or directly to the patients, e.g. by Internet or on newspapers.

## Claims

1. A method for the automatic recognition of pollen grains consisting in analysing, through an image analyser system, a variety of planes of each pollen grain so as to create a three-dimensional image which is compared with the description and knowledge of the characteristics of pollen types stored in its memory, so as to identify the types of the analysed pollen grains.

2. An apparatus for the automatic recognition of pollen grains consisting of a light microscope with a three-dimensionally moving plate for housing the specimen, a camera connected to a computer with a suitable program which automatically focuses the best image of each selected grain and then, by moving the plate, takes a series of images of different planes of the grain so as to create a three-dimensional image, analyses said three-dimensional image so as to identify the pollen type, count each of them and prepares a report with the results.

3. The method of claim 1 applied to the recognition and counting of pollen grains directly collected from the atmosphere.

4. The apparatus of claim 2 applied to the recognition and counting of pollen grains directly collected from the atmosphere.

5. An apparatus according to claims 2 and 4 further comprising an automatic collector of pollen grains from the atmosphere and a colouring system which prepares the pollen specimen.

6. The apparatus of claims 2, 4 or 5 which, after recognition and counting of pollen types, transmits the results to a center wherein the information is analysed for evidencing and forecasting the presence of allergenic pollen grains.

7. A station for automatic detection of pollen in the atmosphere comprising an apparatus according to claims 2, 4, 5 or 6.

8. A network of stations according to claim 7 for the automatic detection of pollen in the atmosphere.
